# EUROPEAN PATENT SPECIFICATION

(11) **EP 3 912 364 B1**
(45) Date of publication and mention of the grant of the patent: **13.12.2023**
(21) Application number: 20741349.3
(22) Date of filing: 15.01.2020
(51) Int. Cl.: H04Q 1/02, G02B 6/44

(54) **TRAY HINGE SYSTEM**
SCHALENSCHARNIERSYSTEM
SYSTÈME DE CHARNIÈRE DE PLATEAU

(30) Priority: 15.01.2019 US 201962792724 P
(43) Date of publication of application: 24.11.2021
(73) Proprietor: CommScope Technologies LLC, Hickory, NC 28602 (US)
(72) Inventor: CLAESSENS, Bart Mattie, Hickory, North Carolina 28602 (US); BECKERS, Erwin, Hickory, North Carolina 28602 (US); GOVAERT, Arthur, Hickory, North Carolina 28602 (US); ALAERTS, Roger Joseph, Hickory, North Carolina 28602 (US)
(74) Representative: Murgitroyd & Company
(86) International application number: PCT/US2020/013745
(87) International publication number: WO 2020/150392

(56) References cited:
- EP-A1- 2 369 388
- WO-A1-2017/184508
- US-A1- 2015 168 663

## Description

### CROSS-REFERENCE TO RELATED APPLICATION

This application is being filed on January 15, 2020 as a PCT International Patent Application and claims the benefit of U.S. Patent Application Serial No. 62/792,724, filed on January 15 2019.

### BACKGROUND

To increase storage density, some telecommunications equipment resides in stacked and hinged trays. In order to gain access to one of the hinged trays, the trays above that tray must be rotated up and held in this position. In some prior art designs, a separate member, sometimes referred to as a "kickstand" is provided on each tray that can be rotated to hold the tray and all above trays in the upward position. Necessarily, the kickstand must be designed to hold the weight of multiple trays. Improvements are desired An example of a device comprising a set of trays is disclosed by the document US2015/168663, Aznag Mohamed, published on 18 June 2015.

### SUMMARY

A telecommunications tray assembly is disclosed. The assembly may include a first telecommunications tray including a first connection arrangement and second telecommunications tray including a second connection arrangement, the first and second connection arrangements rotatably connecting the first tray to the second tray. In one aspect, the first and second connection arrangements define an indexing feature that provides a holding force when the first tray is moved into an open position and when the first tray is moved into a closed position.

In one example a telecommunications tray assembly includes a plurality of stacked telecommunications trays rotatably connected together by connection arrangements located on each of the plurality of telecommunications trays. The connection arrangements can define an indexing feature that provides a holding force when a first telecommunications tray of the plurality of telecommunications trays is moved into an open position and when the first telecommunications tray is moved into a closed position

A stackable telecommunications tray is disclosed. The tray may include a main body defining a base wall and an outer perimeter wall, the base wall and outer perimeter wall defining an interior region for storing telecommunications components. The tray may include a connection arrangement for rotatably interconnecting the stackable telecommunications tray with another stackable telecommunications tray, the connection arrangement defining an indexing feature that provides a holding force when stackable telecommunications tray is moved into an open position and when the first telecommunications tray is moved into a closed position.

In some examples, the open position is 90 degrees relative to the open position.

In some examples, the indexing feature includes a bar member with a generally square cross-sectional shape located on the first telecommunications tray received in an open channel located on the second telecommunications tray.

In some examples, the first telecommunications tray is identical to the second telecommunications tray.

In some examples, all of the trays are identical to each other.

In some examples, the first connection arrangement is identical to the second connection arrangement.

In some examples, connection arrangements include an upper connection arrangement and a lower connection arrangement, wherein the lower connection arrangement of the first telecommunications tray rotatably connects to the upper connection arrangement of the second telecommunications tray.

In some examples, the trays include a nesting arrangement including an upper nesting arrangement and a lower nesting arrangement, each of the upper and lower nesting arrangements being located on each of the first and second telecommunications tray, wherein the lower nesting arrangement of the first telecommunications tray nests with the upper nesting arrangement of the second telecommunications tray when the first telecommunications tray is rotated into the closed position.

In some examples, the connection arrangement is disposed on the outer perimeter wall of the tray.

In some examples, the indexing feature is disposed on the outer perimeter wall of the tray.

In some examples, the nesting feature is defined within the outer perimeter wall.

In some examples, the connection arrangement and/or the nesting feature is integrally formed with the main body of the tray.

In one example, a support structure for anchoring a telecommunications tray within an enclosure has a main body including a first connection arrangement for rotatably connecting to a second connection arrangement of the telecommunications tray; and a second connection arrangement for connecting the main body to the enclosure.

In some examples, the first connection arrangement defines an indexing feature that provides a holding force when the telecommunications tray is moved into an open position and when the telecommunications tray is moved into a closed position.

In some examples, the support structure includes a nesting arrangement including an upper nesting arrangement disposed on the main body and interacting with a lower nesting arrangement of the telecommunications tray when the telecommunications tray is rotated into the closed position.

In some examples, the support structure includes a retention feature including either a shaft member for being received within a receiving member of the telecommunications tray or a receiving member for receiving a shaft member of the telecommunications tray, wherein interaction between the shaft member and the receiving member provides a holding force to prevent lateral movement between the main body and telecommunications tray.

In one example, a telecommunications tray assembly includes a first telecommunications tray including a first connection arrangement, a second telecommunications tray including a second connection arrangement, the first and second connection arrangements rotatably connecting the first tray to the second tray, and a nesting arrangement including an upper nesting arrangement and a lower nesting arrangement, each of the upper and lower nesting arrangements being located on each of the first and second telecommunications tray, wherein the lower nesting arrangement of the first telecommunications tray nests with the upper nesting arrangement of the second telecommunications tray when the first telecommunications tray is rotated into the closed positions.

In some examples, the upper nesting arrangement is one of a protrusion and a recess and the lower nesting arrangement is one of a protrusion and a recess.

In some examples, the nesting arrangement includes a plurality of protrusions and recesses.

In one example a telecommunications tray assembly includes a first telecommunications tray including a first connection arrangement and a second telecommunications tray including a second connection arrangement, the first and second connection arrangements rotatably connecting the first tray to the second tray, wherein the first and second connection arrangements retention feature including a shaft member and a receiving member, wherein interaction between the shaft member of the first telecommunications tray and the receiving member of the second telecommunications tray provides a holding force to prevent lateral movement between the first and second trays.

In some examples, the retention feature includes one of a channel and a rib structure located on the shaft member and includes one of a channel and a rib structure on the receiving member.

In some examples, the shaft member includes a tapered segment and a straight segment.

In some examples, the channel or rib structure is located on the straight segment of the shaft.

In some examples, one or both of the first and second connection arrangements include a deflectable member.

In some examples, a shaft member of the first or second connection arrangement is deflectable relative to a receiving member of the first or second connection arrangement.

A variety of additional aspects will be set forth in the description that follows. The aspects can relate to individual features and to combinations of features. It is to be understood that both the forgoing general description and the following detailed description are exemplary and explanatory only and are not restrictive of the broad inventive concepts upon which the examples disclosed herein are based.

### BRIEF DESCRIPTION OF THE DRAWINGS

The accompanying drawings, which are incorporated in and constitute a part of the description, illustrate several aspects of the present disclosure. A brief description of the drawings is as follows:
Figure 1 is a rear perspective view of a schematic representation of a tray assembly having features in accordance with the present disclosure.
Figure 2 is a front perspective view of the tray assembly shown in Figure 1.
Figure 3 is a top view of the tray assembly shown in Figure 1.
Figure 4 is a bottom view of the tray assembly shown in Figure 1.
Figure 5 is rear view of the tray assembly shown in Figure 1.
Figure 6 is a front view of the tray assembly shown in Figure 1.
Figure 7 is a side view of the tray assembly shown in Figure 1.
Figure 8 is a cross-sectional side view of the tray assembly shown in Figure 1, with an upper tray of the tray assembly in a closed position.
Figure 9 is a cross-sectional side view of the tray assembly shown in Figure 1, with an upper tray of the tray assembly in an open position.
Figure 10 is an exploded front perspective view of a tray of the tray assembly shown in Figure 1.
Figure 11 is an exploded rear perspective view of the tray shown in Figure 10.
Figure 12 is a top view of the tray shown in Figure 10.
Figure 13 is a bottom view of the tray shown in Figure 10.
Figure 14 is a rear view of the tray shown in Figure 10.
Figure 15 is a front view of the tray shown in Figure 10.
Figure 16 is a side view of the tray shown in Figure 10.
Figure 17 is a cross-sectional side view of the tray shown in Figure 10.
Figure 18 is an enlarged portion of the tray shown in Figure 10, as indicated at Figure 16.
Figure 19 is an enlarged portion of the tray shown in Figure 10, as indicated at Figure 17.
Figure 20 is an enlarged portion of the tray shown in Figure 10, as indicated at Figure 17.
Figure 21 is a perspective view of the tray assembly shown in Figure 1 with an upper tray shown in an initial installation position.
Figure 22 is a perspective view of the tray assembly shown in Figure 21 with the upper tray shown in an intermediate installation position.
Figure 23 is a perspective view of the tray assembly shown in Figure 22 with the upper tray shown in a fully installed position.
Figure 24 is a first perspective view of a first support structure of the tray assembly shown in Figure 1.
Figure 25 is a second perspective view of the first support structure shown in Figure 24.
Figure 26 is a first view of the first support structure shown in Figure 24.
Figure 27 is a cross-sectional side view of the first support structure shown in Figure 24.
Figure 28 is a top view of the first support structure shown in Figure 24.
Figure 29 is a bottom view of the first support structure shown in Figure 24.
Figure 30 is a front view of the first support structure shown in Figure 24.
Figure 31 is a rear view of the first support structure shown in Figure 24.
Figure 32 is a first perspective view of a second support structure of the tray assembly shown in Figure 1.
Figure 33 is a second perspective view of the second support structure shown in Figure 32.
Figure 34 is a front view of the second support structure shown in Figure 32.
Figure 35 is a rear view of the second support structure shown in Figure 32.
Figure 36 is a top view of the second support structure shown in Figure 32.
Figure 37 is a side view of the second support structure shown in Figure 32.
Figure 38 is a perspective view of a schematic representation of a tray assembly having features in accordance with the present disclosure.
Figure 39 is a perspective exploded view of a tray of the tray assembly shown in Figure 38.
Figure 40 is a top view of the tray shown in Figure 39.
Figure 41 is an end view of the tray shown in Figure 39.
Figure 42 is a partial perspective view of the tray shown in Figure 39.
Figure 43 is a perspective view of a schematic representation of a tray assembly having features in accordance with the present disclosure.
Figure 44 is a partial perspective view of a tray of the tray assembly shown in Figure 43.
Figure 45 is a perspective view of a schematic representation of a tray assembly having features in accordance with the present disclosure.
Figure 46 is a perspective view of the tray assembly shown in Figure 45 with a tray in the opened position.
Figure 47 is a perspective view of a tray of the tray assembly shown in Figure 45.
Figure 48 is a perspective view of a schematic representation of a tray assembly having features in accordance with the present disclosure.
Figure 49 is a perspective view of the tray assembly shown in Figure 48 with a tray in the opened position.
Figure 50 is a perspective view of a schematic representation of a tray assembly having features in accordance with the present disclosure.
Figure 51 is a perspective view of the tray assembly shown in Figure 51 with a tray in the opened position.

### DETAILED DESCRIPTION

Various examples will be described in detail with reference to the drawings, wherein like reference numerals represent like parts and assemblies throughout the several views. Reference to various examples does not limit the scope of the claims attached hereto. Additionally, any examples set forth in this specification are not intended to be limiting and merely set forth some of the many possible examples for the appended claims. Referring to the drawings wherein like reference numbers correspond to like or similar components throughout the several figures.

It is noted that the following description may utilize directional language (e.g. raised, lowered, upper, lower, horizontal, vertical, etc.) that indicates a particular orientation. Although the disclosed tray assemblies 100 can be oriented as shown in the drawings, many other orientations are possible, and the directional language used herein should not be taken to limit the disclosure.

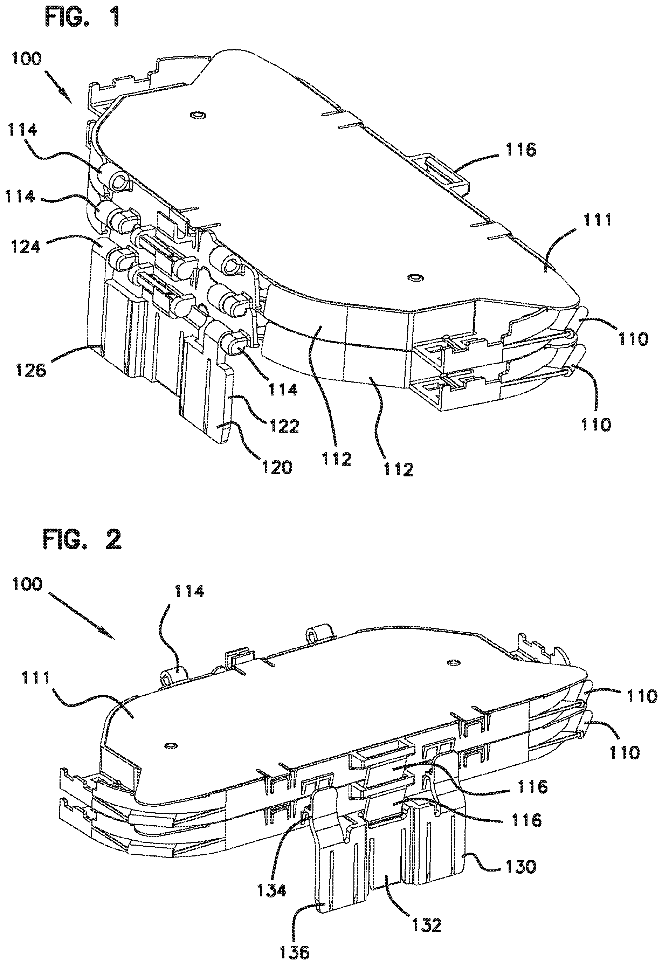

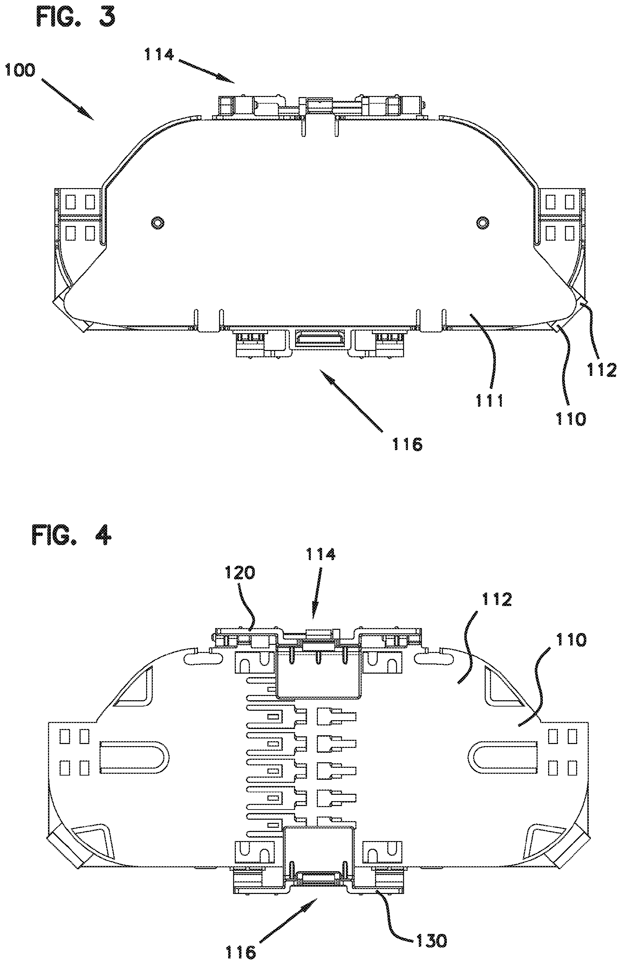

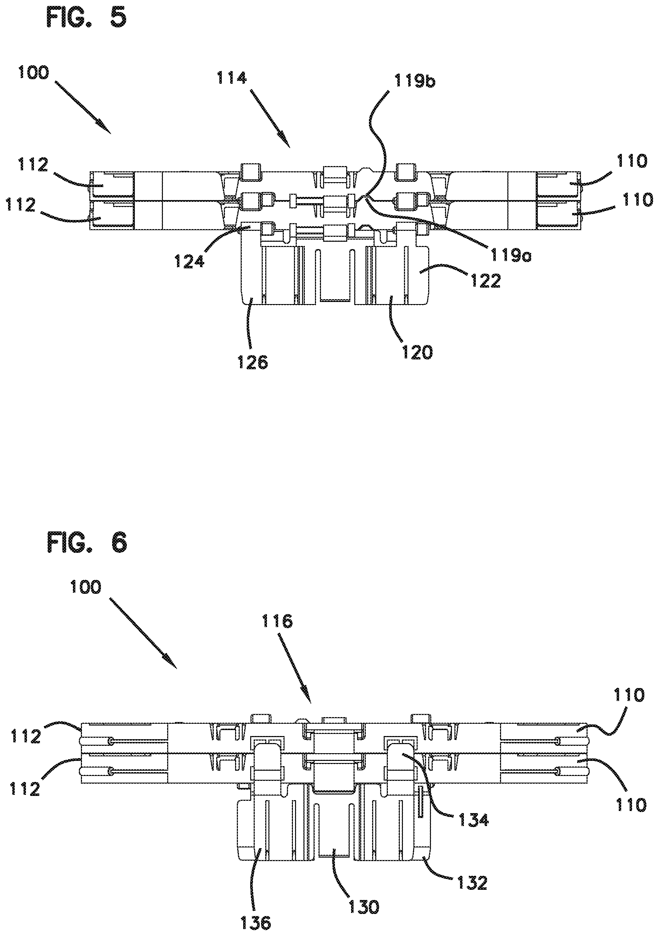

Referring to Figures 1-9, a first example of a tray assembly 100 is presented. As shown, the tray assembly 100 includes a plurality of stacked trays 110 rotatably connected to and supported by each other. In the example shown, two stacked trays 110 are provided. However, more trays 110 may be provided, for example, three, four, five, or more trays 110 may be stacked together.

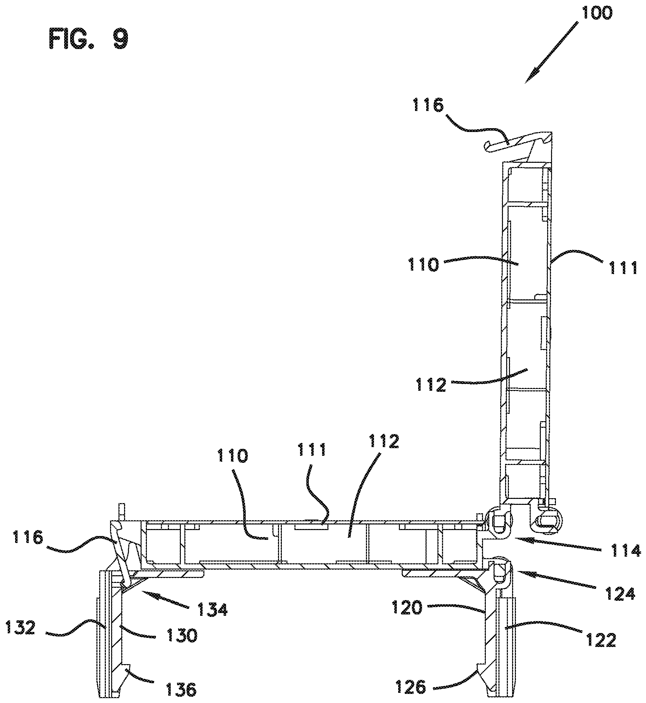

As shown, each tray 110 is provided with a main body portion 112, a connection arrangement 114, and a latching arrangement 116. The connection arrangement 114 of one tray 110 interconnects with the connection arrangement 114 of another tray 110 such that the trays 110 are rotatable with respect to each other. The latching arrangement 116 of one tray 110 latches to a below tray 110 to hold the above tray 110 in a closed position (e.g. position of upper tray 110 in Figures 1-8) such that the tray 110 is prevented from being rotated into an open position (e.g. position of upper tray 110 in Figure 9) until the latching arrangement 116 is disengaged. In some examples, each tray 110 can be also provided with an optional removable cover portion 111 which is connected to the tray main body portion 112 via a snap-fit connection.

In some examples, the main body portion 112, connection arrangement 114, and latching arrangement 116 of each tray 110 is unitarily formed as a single component. In some examples, the trays 110 are formed from a polymeric material, such as an ABS polycarbonate material. The cover portions 111, where provided, may also be formed of a polymeric material or another material, such as a metal material.

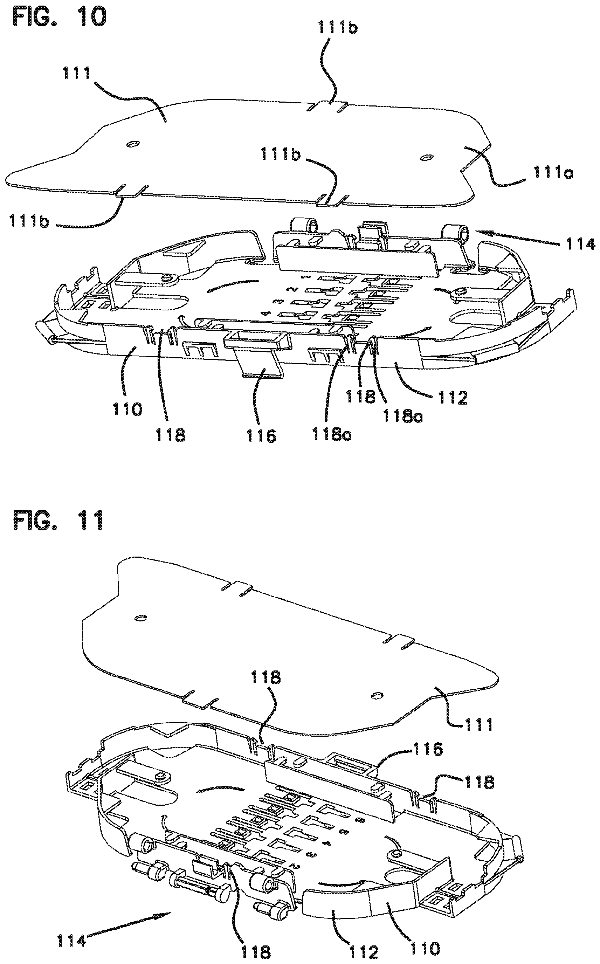

Referring to Figures 10 and 11, a single tray 110 and cover 111 are shown in isolation. In one aspect, the cover 111 is connected to the tray 110 by a snap-fit connection. As shown, the cover 111 is provided with deflectable tabs 111a while the tray 110 is provided with connection arrangements 118. Each connection arrangement 118 includes a pair of deflectable latch arms 118a. When the cover 111 is pressed towards the tray 110, the latch arms 118a deflect and snap around the tabs 111a to secure the cover 111 to the tray 110.

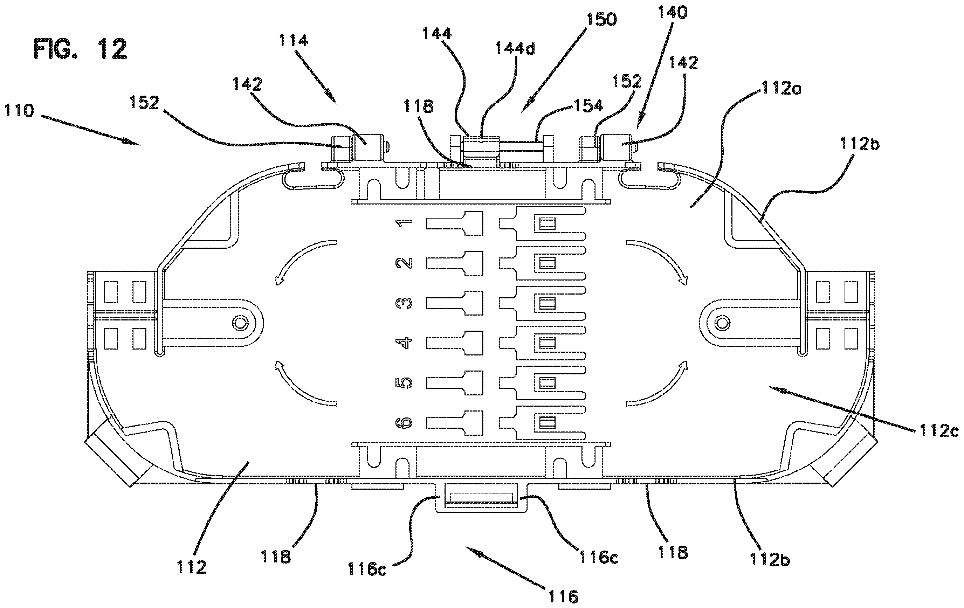

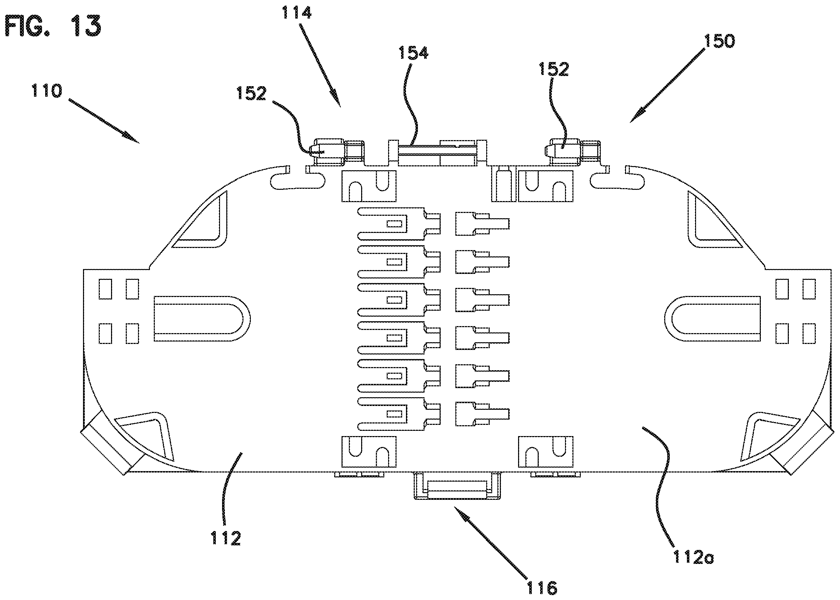

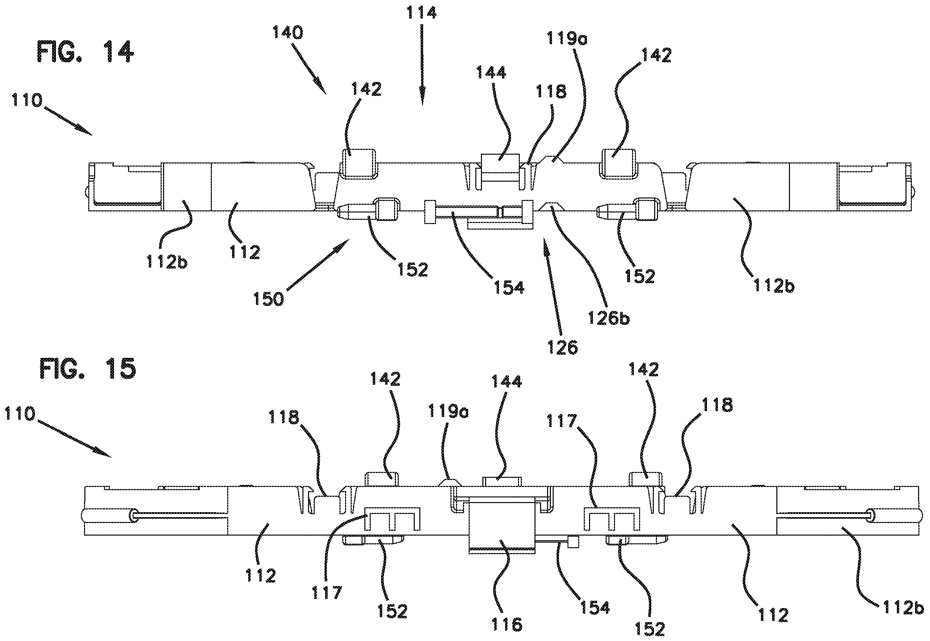

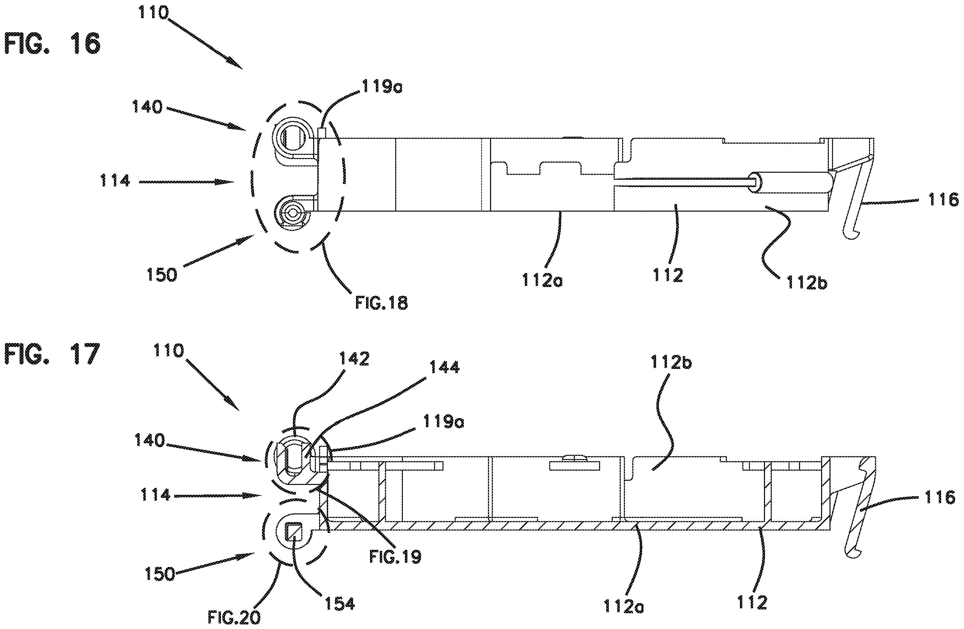

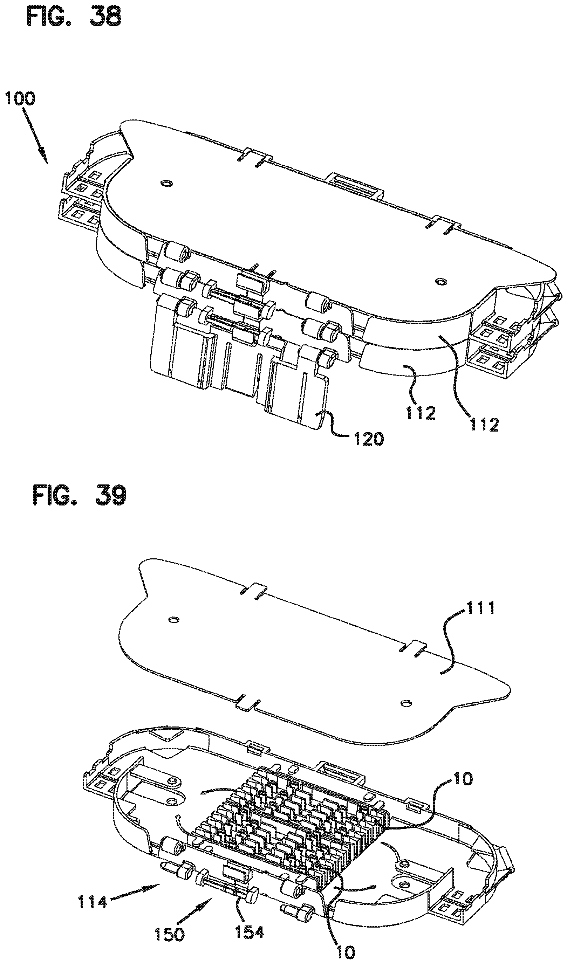

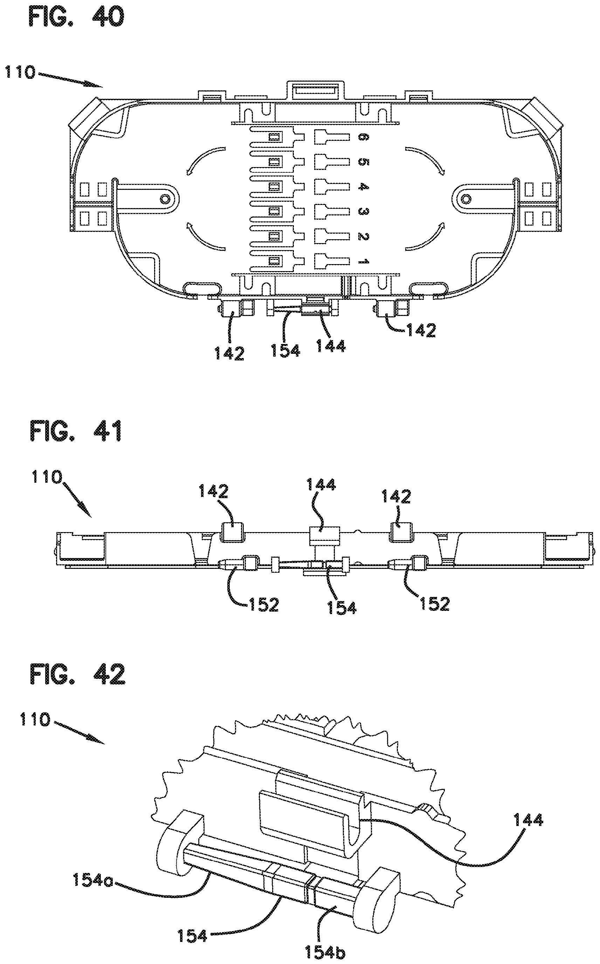

Referring to Figures 12 to 16, a single tray 110 is shown in isolation. As referenced previously, the tray 110 includes a main body portion 112. The tray portion 112 is shown as defining a base surface or end wall 112a from which perimeter sidewalls 112b extends. Together, the end wall 112a and sidewalls 112b define an interior storage space 112c for housing telecommunications cables and other related components. Although the end wall 112b is shown without any further features, additional projections and structures can be provided to facilitate the retention of telecommunications cables and other related components. In some examples, the tray 110 is configured as a fiber optic splice tray (for example see the configuration at Figures 38 to 42 showing the inclusion of fiber splice modules 10).

Still with reference to Figures 12 to 16, the connection arrangement 114 can be viewed in further detail. In one aspect, the connection arrangement 114 includes an upper connection arrangement 140 and a lower connection arrangement 150. The upper connection arrangement 140 of one tray 110 is configured to interconnect with the lower connection arrangement 150 of an above tray 110. With such a configuration, any number of trays 110 can be stacked together.

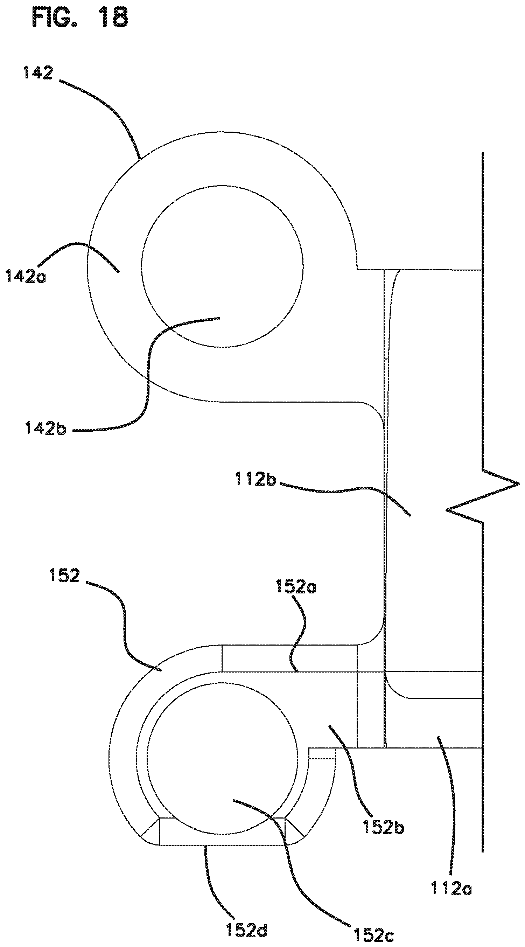

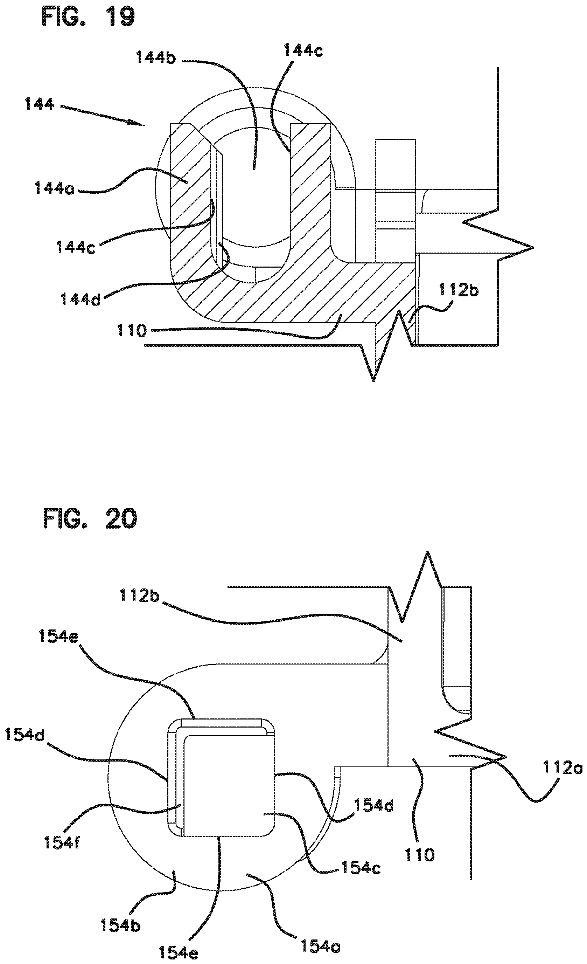

As shown, the upper connection arrangement 140 includes a pair of receiving members 142. As most easily seen in the partial view presented at Figure 18, each receiving member 142 is shown as including a main body 142a defining a through-hole or bore or 142b. In the example shown, the bore 142b is cylindrically shaped. The upper connection arrangement 140 is also shown as being provided with a first part 144 of an indexing arrangement. As most easily seen in the partial view presented at Figure 19, each indexing arrangement first part 144 includes a main body 144a defining an open channel 144b. In the example shown, the open channel 144b has a U-shape with spaced apart, parallel walls 144c facing each other. As presented, one of the walls 144c is provided with a vertical rib 144d.

As shown, the lower connection arrangement 150 includes a pair of projection members 152. As most easily seen in the partial view presented at Figure 18, each projection member 152 is shown as including a main body 152a defining a base member 152b extending orthogonally away from the sidewall 112b and a shaft member 152c extending from the base member 145a in a direction parallel to the sidewall 112b. In the example shown, the shaft member 152c is cylindrically shaped. In one aspect, the shaft member 152c of the projection member 152 is received into the bore 142b of the receiving member 142 to form a rotatable, hinged connection. As shown, the outer diameter of the shaft member 152c is slightly less than the inner diameter of the bore 142b. In one aspect, the projection member main body 112b additionally includes a stop surface 152d which extends parallel to the base or end wall 112a of the tray. When a tray 110 is opened sufficiently, the stop surface 152d will abut the end wall 112b of the below tray 112 to prevent further rotation of the upper tray 110. In the example shown, the stop surface 152d is oriented such that the tray 110 is prevented from being rotated past 90 degrees relative to the closed position. Other configurations are possible to limit the tray 110 from being opened to a desired degree.

The lower connection arrangement 150 is also shown as including a second part 154 of the indexing arrangement. The indexing arrangement second part 154 is received into the indexing arrangement first part 144. In operation, the first and second parts 144, 154 of the indexing arrangement cooperate to provide a holding force that holds the tray 110 in the open and closed positions at a desired rotational angle unless a sufficient force is applied to move the tray between the open and closed positions. As shown, each second part 154 includes a main body 154a defining a pair of base members 154b extending orthogonally away from the sidewall 112b and a bar member 154c extending between the base members 145a in a direction parallel to the sidewall 112b. As most easily seen at Figure 20, the bar member 154c is provided with a rectangular cross-section with outer walls 154d that are parallel to the sidewall 112b and outer walls 154e that are orthogonal to the sidewall 112b.

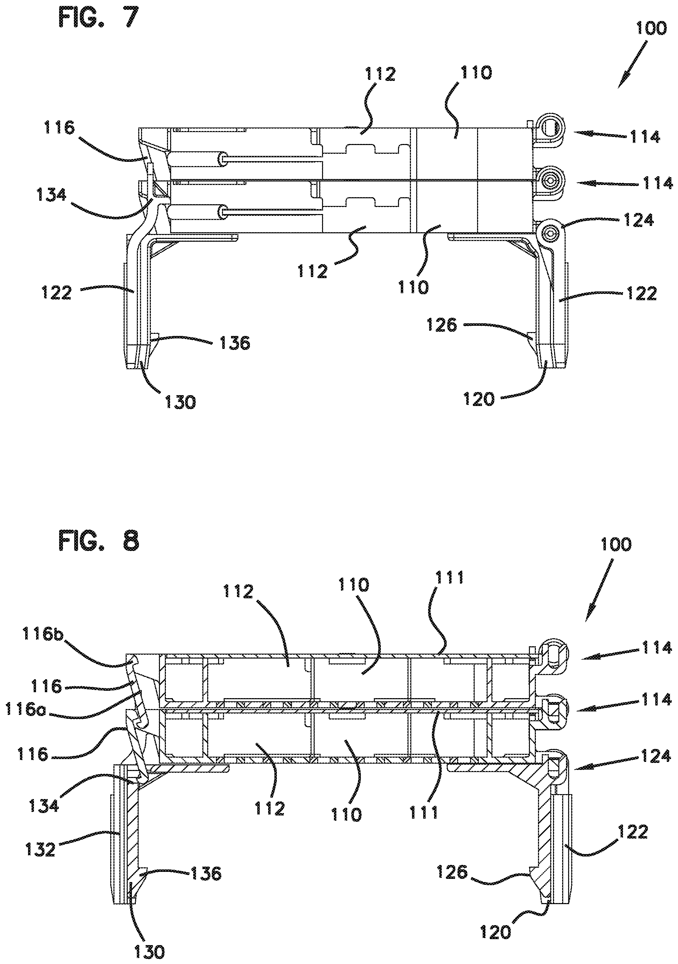

In the particular example shown, the bar member has a square cross-sectional shape with the distances between the walls 154d and between the walls 154e being generally equal to the distance between the walls 144c of the open channel 144b. Accordingly, and as shown in the cross-sectional view at Figure 8, the walls 154d are in contact with the walls 144c when the tray 110 is in the closed position. Likewise, and as shown in the cross-sectional view at Figure 9, the walls 154e are in contact with the walls 144c when the tray 110 is in the open position. Thus, the tray 110 is retained in a given position by the indexing arrangement. In order to move the tray 110 out of the open or closed position, a sufficient force must be applied such that the walls 144c of the open channel 144b deflect outwardly by force of the rotating bar member 154c.

As the bar member 154c is provided with a square cross-sectional shape, the bar member 154c indexes the tray between a closed position and an open position that are separated by 90 degrees. Other indexing angles are possible. For example, the bar member 154c could be provided with a hexagonal shape such that the tray 110 can be indexed into multiple open positions (e.g. 60 degrees and 120 degrees from the horizontal or closed position). Octagonal and other shapes may also be provided. Additionally, the open channel 154b may also be configured with additional sidewalls corresponding to those of the bar member 154c, if desired.

In one aspect, the bar member 154c is additionally provided with a channel or recess 154f on two sides of the bar member 154c. The channel or recess 154f is provided with a depth generally equal to the height of the rib structure 144d of the connection arrangement first part 144. Once a tray 110 is connected to another tray 110, the rib structure 144d of the lower tray 110 is received by the channel 154f of the upper tray 110. As the channel 154f is provided on two sides of the bar member 154c, the rib structure 144d travels within the channel 154f as the tray 110 moves between the open and closed positions. In one aspect, the interaction between the rib structure 144d and the channel 154f provides resistance to lateral movement between two interconnected trays 110 and serves to retain the trays 110 together unless a sufficient lateral removing force is applied.

Each tray 110 is also provided with an upper nesting feature 119a and a cooperatively shaped lower nesting feature 119b located in the sidewall 112b. In the example shown, the upper nesting feature 119a is provided as a trapezoidal shaped projection in the sidewall 112b while the lower nesting features 119b is provided as a trapezoidal shaped recess in the sidewall 112b. Other shapes are possible. Once an upper tray 110 is moved into the closed position, the lower nesting feature 119b is received into the upper nesting feature 119a of the below tray 110. Thus, the nesting features 119a, 119b cooperate to prevent lateral movement between the trays 110 while the trays 110 are in the closed position, which reduces load forces potentially exerted on the channel 154f and rib structure 144d. It is noted that while projections and recesses are shown in a particular arrangement, the lower nesting feature could be provided as a projection while the upper nesting feature could be provided as a recess. Although a single nesting feature is shown, more nesting features may be provided which may have the same shape or different shapes and at different locations (e.g. at the front wall of the tray opposite the connection arrangement, on the sidewalls, and/or the back wall adjacent the connection arrangement). Additionally, the presence of the nesting features 119a, 119b ensures that only compatible trays 110 are connected together, thereby ensuring that a correct assembly results.

As mentioned previously, each tray 110 is also provided with a latching feature 116. In one aspect, the latching features 116 includes a deflectable latch arm 116a and a catch 116b, both formed in the sidewall 112b of the tray 110. In one aspect, both the catch 116b and the deflectable latch arm 116a re supported by a pair of support arms 116c extending from the sidewall 112b. The catch 116b is formed between the support arm 116c while the deflectable latch arm 116a extends downwardly from the support arms 116c. When an upper tray 110 is moved to the closed position, the deflectable latch arm 116a initially deflects around the catch 116b of the below tray 110 and then ultimately snaps over the catch 116b to form a snap-fit connection to retain the upper tray 110 in the closed position. This position is most easily seen at Figure 8. The upper tray 110 can be moved out of the closed position by either applying a sufficient opening force on the tray 110 to disengage the latch arm 116a from the catch 116b or by simply deflecting the latch arm 116a inwardly (e.g. by depressing a finger) to disengage the latch arm 116a from the catch 116b and then rotating the upper tray 110.

To assemble one tray 110 onto another tray 110, an upper tray 110 is oriented in the open position and aligned vertically above a lower tray 110 and laterally offset such that the ends of the shaft members 152c of the projection members 152 are offset from the ends of the bores 142b of the receiving members 142. The location and length of the bar member 154c is such that a portion of the bar member 154c of the second part of the indexing arrangement will still be aligned over the channel 144b of the first part of the indexing arrangement. In this first alignment step, the tray 110 must be oriented in the open position, or at least not in the closed position, due to the presence of the nesting and latching features 116, 119 on the trays 110 which would otherwise interfere with each other when both trays 110 are parallel to each other. This position is shown at Figure 20.

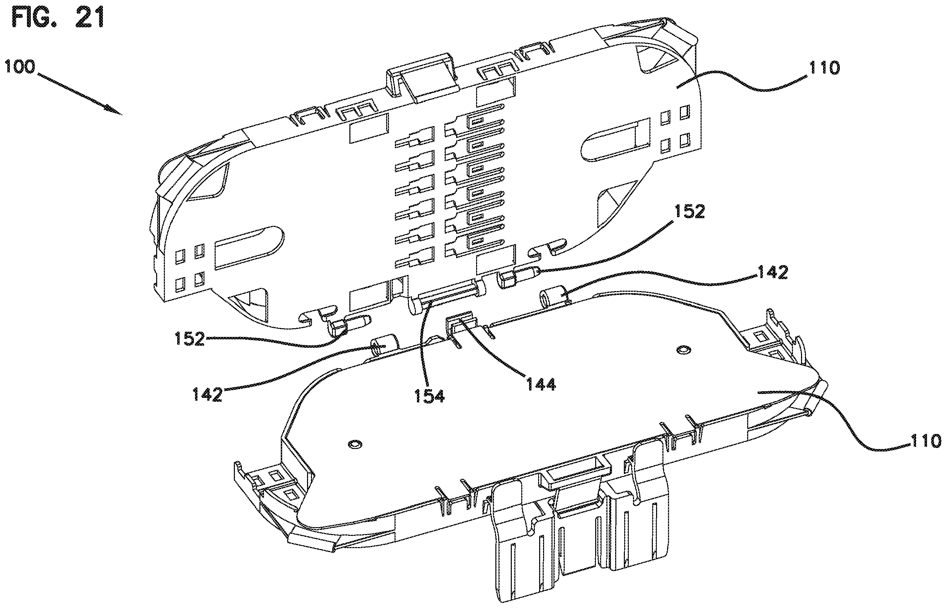

From the position shown in Figure 20, the upper tray 110 can be displaced downwardly until the shaft members 152c of the projection members 152 are coaxially aligned with the bores 142b of the receiving members 142. In this position, which can be seen at Figure 21, the bar member 144c is received into the channel 144b. From the position shown at Figure 21, the upper tray is displaced laterally such that the shaft members 152c are received into the bores 144b and until the channel 154f in the bar member 154 is received by the rib structure 144d of the connection arrangement first part 144. At this point, the upper tray 110 is fully connected to the lower tray 110.

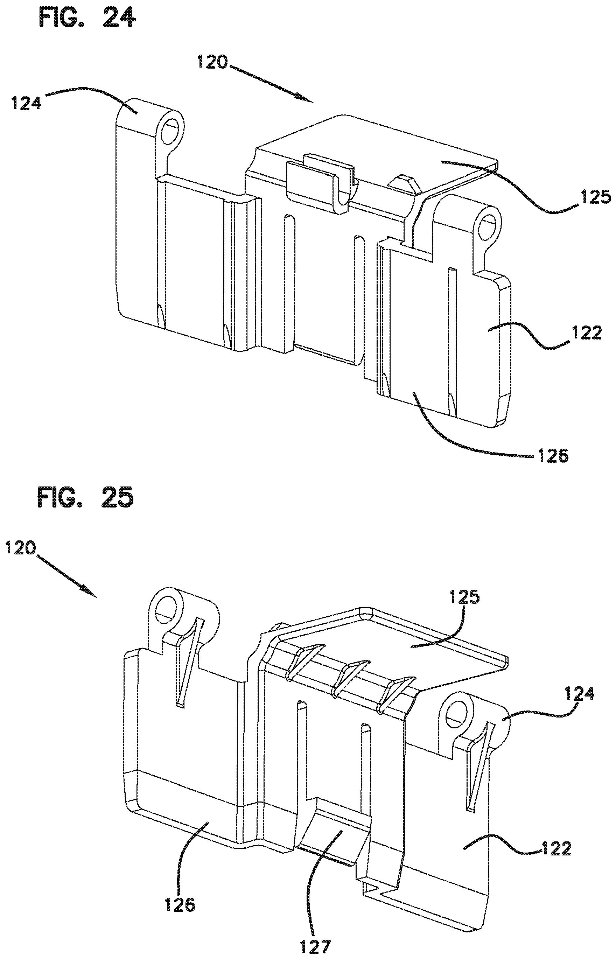

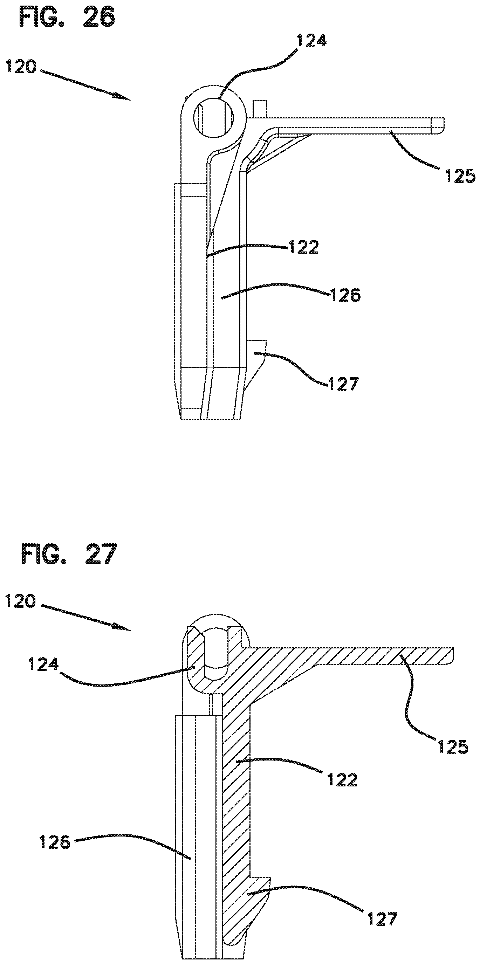

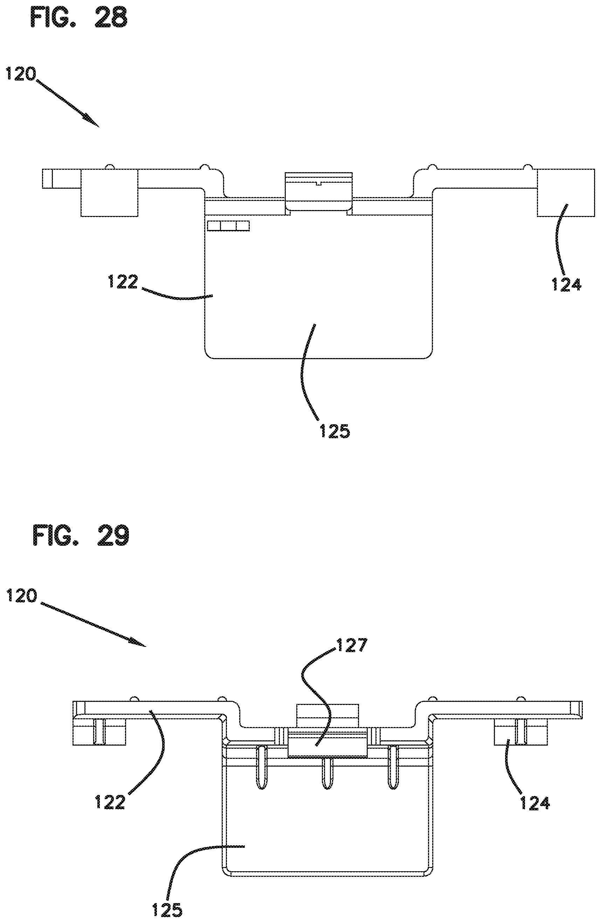

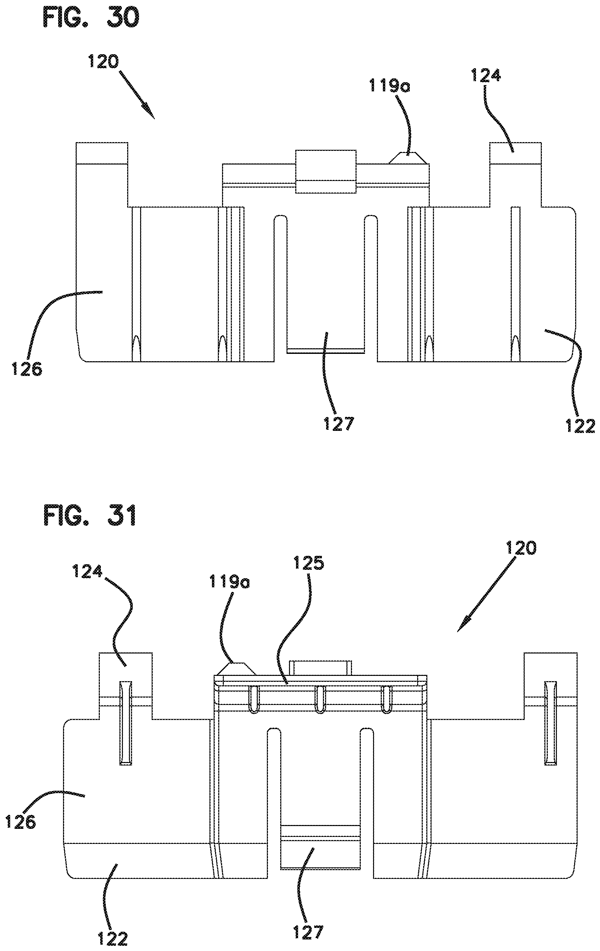

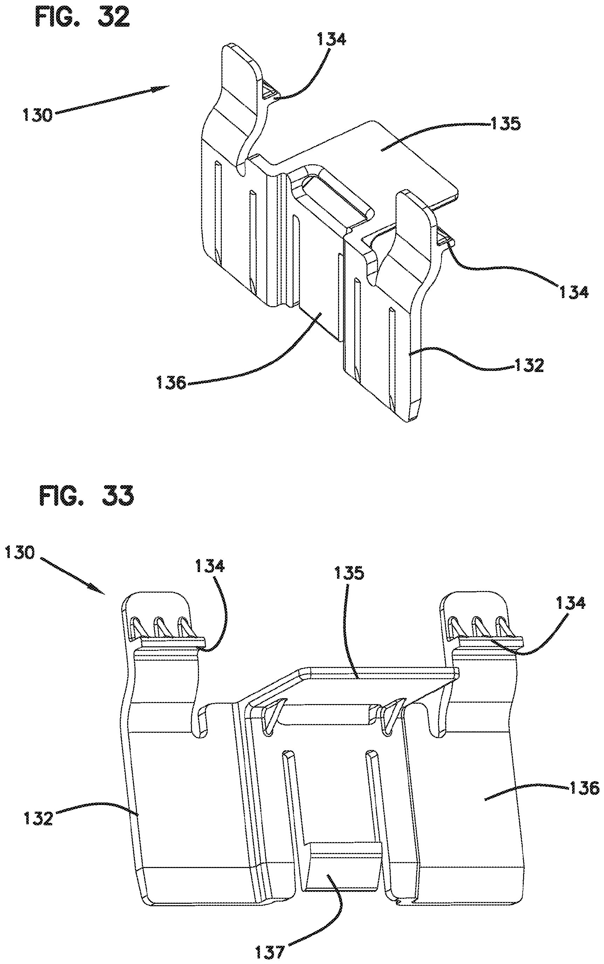

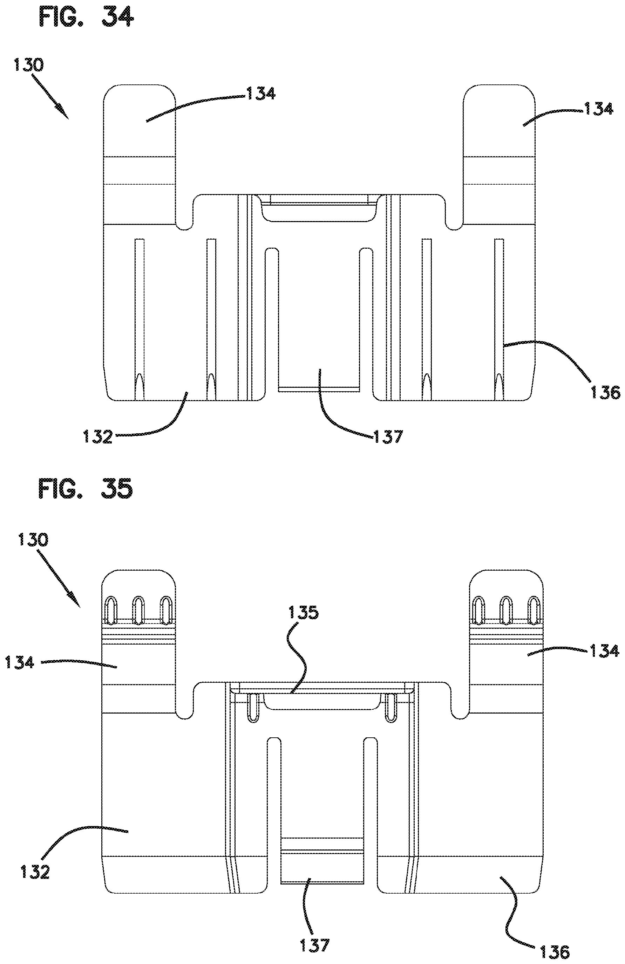

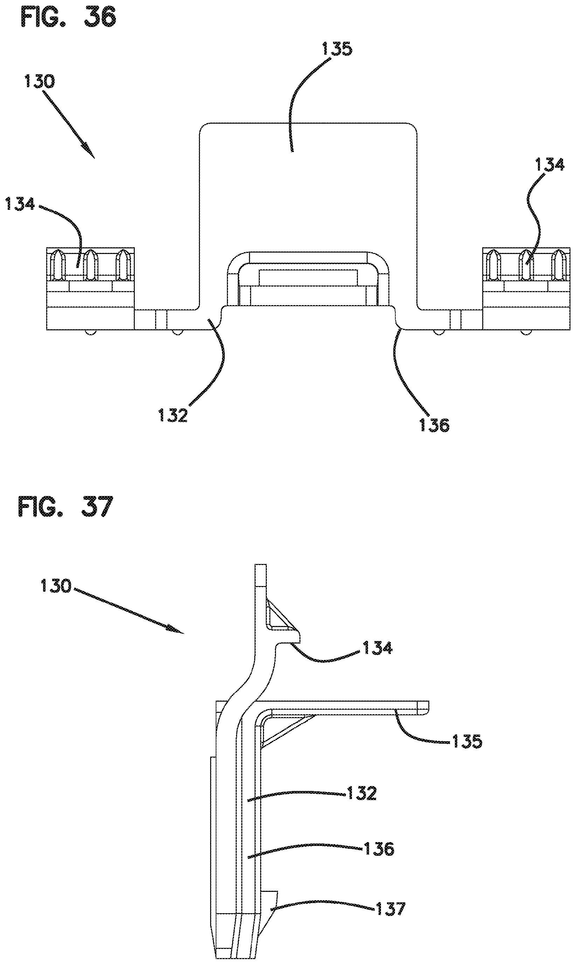

Referring to Figures 1-9, the tray assembly 100 is also shown as being provided with a first support structure 120 and a second support structure 130. The support structures 120, 130 enable the tray assembly 100 to be mounted within an enclosure (not shown). The support structure 120 is shown in isolation at Figures 24 to 31 while the support structure 130 is shown in isolation at Figures 32 to 37.

As shown, the first support structure 120 includes a main body 122 with a first connection arrangement 124 that rotatably interconnects with the connection arrangement 114 of the bottommost tray 110. The first connection arrangement 124 is thus configured identically to the receiving members 142 and the first part 144 of the indexing arrangement of the trays 110. A nesting feature 119a can also be provided on the support structure 120. The first support structure 120 is also shown as including a second connection arrangement 126 that connects to a correspondingly shaped slot structure within the enclosure. A deflectable latch arm 127 may be provided with the second connection arrangement 126 for providing a snap-fit type connection with the enclosure. The first support structure 120 can also be provided with a shelf or support member 125 to support the end wall 112a of the bottommost tray 110.

As shown, the second support structure 130 includes a main body 132 with a latching arrangement with deflectable latch arms 134 that interconnects with tabs 117 on the bottommost tray 110 in a snap-fit type connection to prevent the tray 110 from rotating with respect to the enclosure. The second support structure 130 is also shown as including a connection arrangement 136 that connects to the enclosure. A deflectable latch arm 137 may be provided with the second connection arrangement 136 for providing a snap-fit type connection with the enclosure. The second support structure 130 can also be provided with a shelf or support member 135 to support the end wall 112a of the bottommost tray 110.

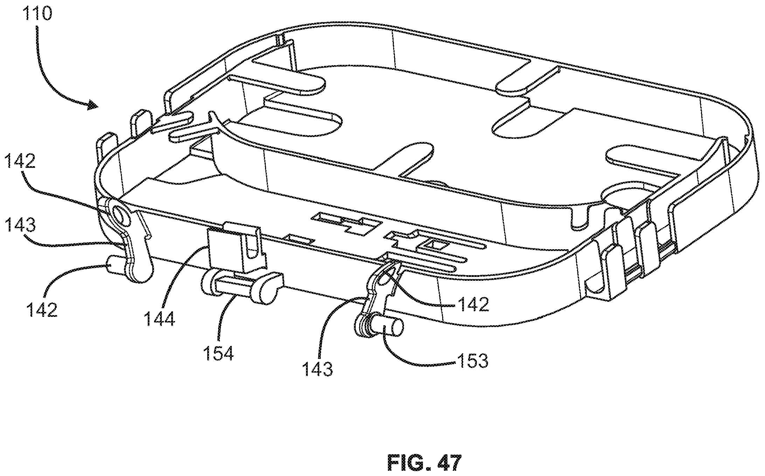

Additional examples of a tray assembly 100 are presented at Figures 38 to 51.

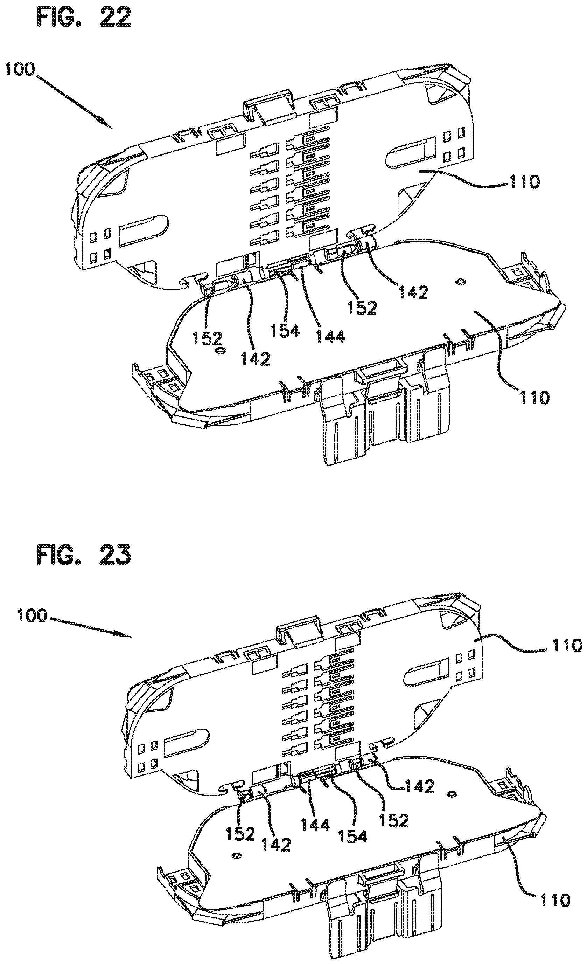

The example presented at Figures 38-42 is largely similar to the example presented at Figures 1-37. As such, the description for the example presented at Figures 1 to 37 is generally applicable to the example presented at Figures 38 to 42. A notable difference in the example of Figures 38 to 42 is that the lower connection arrangement 150 on the tray 110 is provided with an indexing arrangement second part 154 that is tapered such that the second part 154 is narrower in each dimension at one end 154a in comparison to the other end 154b. In one aspect, the tapered end 154a is narrower than the width of the open channel 144b of the indexing arrangement first part 144. With such a configuration, when the tray 110 is initially being installed such that the end 154a of the second part 154 of one tray 110 is initially received into the open channel 144b of the tray 110 (as described with respect to Figure 22), little resistance is encountered as the end 154a does not require for the walls of the first part 144 to be outwardly deflected in order to facilitate insertion of the second part 154. Even in instances where the parts are sized such that there is contact between the first and second parts 154 during insertion, the degree of required deflection is greatly reduced in comparison to a non-tapered second part 154. The second end 154b of the second part 154 is dimensioned similarly to that shown for the second part 154 in Figures 1 to 37 such that when the tray 110 is fully installed onto a below tray, the second end 154b is received in the open channel 144b and the tray 110 operates as previously described after installation.

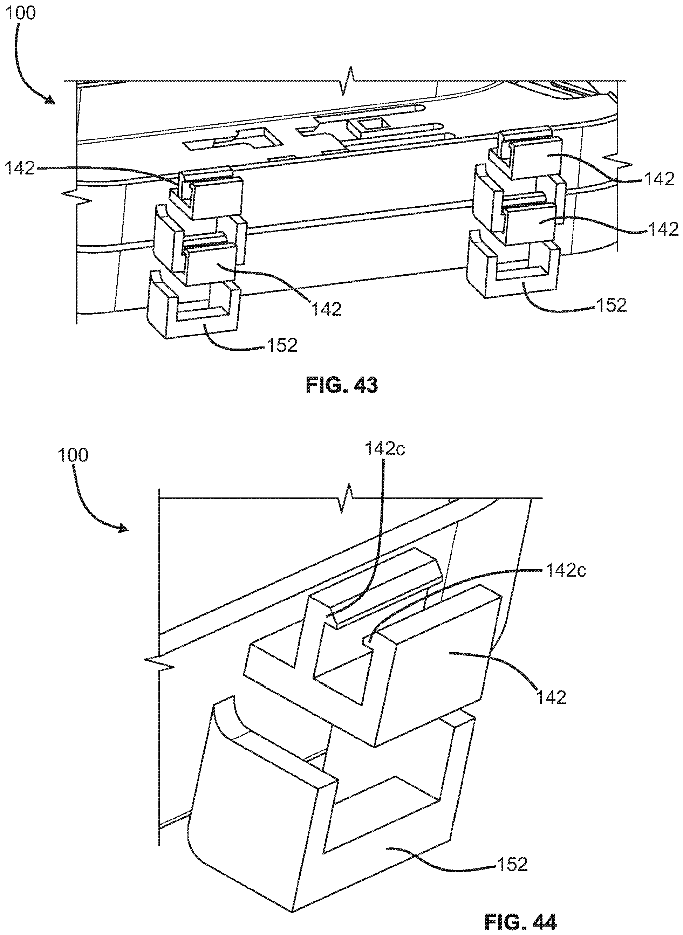

The example presented at Figures 43 and 44 demonstrates that the indexing arrangement and connection arrangement on a tray 110 can be combined together rather than being separate components. In the example shown, the receiving members 142 define an open channel with a square cross-sectional shape which receives shaft members 152 having a square cross-sectional shape. As discussed previously, other cross-sectional shapes are possible. With such a configuration, the receiving members 142 and shaft members 152 function to allow the trays 110 to pivot relative to each other while also providing for an indexing arrangement such that each tray 110 can be rotated and retained in the open and closed positions. In the example shown, the receiving members 142 are provided with latch features 142c to aid in securely retaining the shaft members 152 after installation. This configuration also allows for the trays 110 to be directly snapped onto each other in a simple downward motion with the tray in the horizontal position without requiring the tray 110 to be first oriented into the open position, as explained for the example shown at Figures 1 to 37.

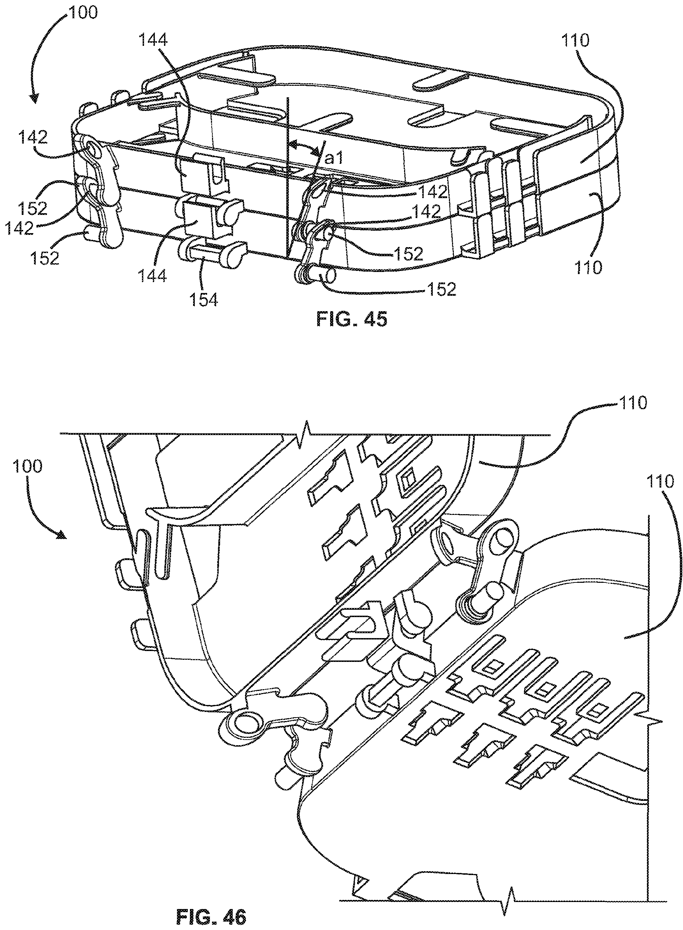

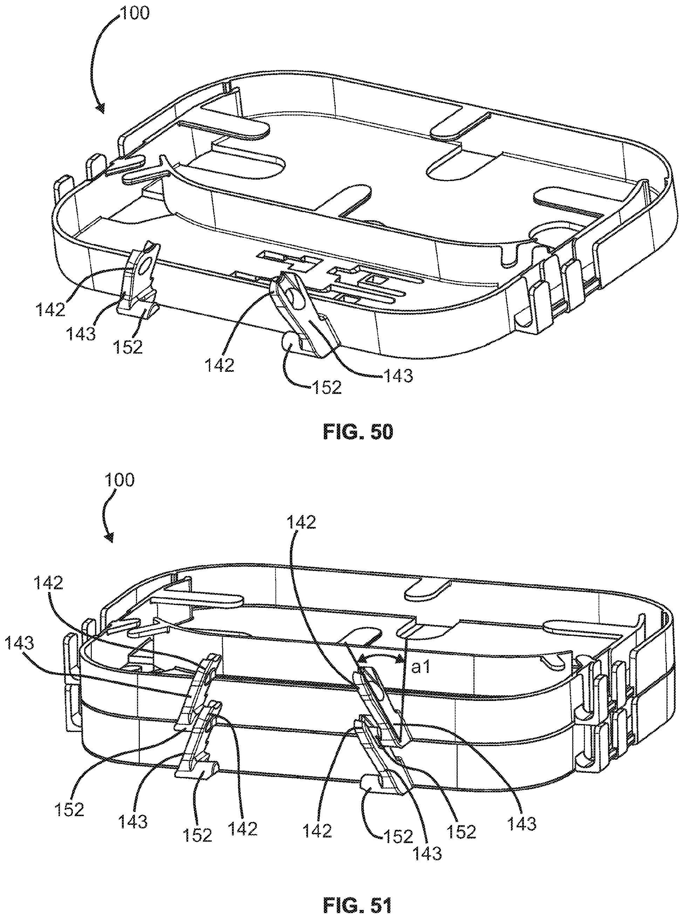

The examples presented at Figures 45 to 47 and 50 to 51 demonstrate that the receiving members 142 and shaft members 152 can be provided with alternative shapes and configurations. In the example shown at Figures 45 to 47, a central indexing arrangement 144/154 is provided that has generally the same shape as that shown for the receiving and shaft members 142, 152 for the example shown at Figures 43 and 44. However, the connection arrangement is configured differently in which one component is deflectable about the other. For example, the receiving members 142 are provided as deflectable tabs 142 that are presented at an obtuse oblique angle a1 to the longitudinal axes of the shaft members 152. The angle a1 results in the connection arrangements tapering from the top end of the tray towards the bottom end of the tray and such that the shaft members 152 are vertically aligned above the receiving members 142. To facilitate this construction, each connection arrangement 142/152 is formed with a main body 143 that is attached to the tray body 110. The main body 143 is attached such that the shaft members 152 can deflect inwardly (i.e. towards each other) once they contact the main body 143 of the below tray 110. Once this contact occurs, the shaft members 152 ride against the main body 143 until the shaft members 152 snap into the receiving members. With such a configuration, the trays 110 can be held in a horizontal (i.e. closed) position and snapped onto the tray below with the shaft members 152 causing the receiving members 142 to deflect outwardly until the shaft members 152 snap into the opening 142b in the receiving member 142. Simultaneously, the shaft member 154 is snap-fit into the receiving member 144 of the indexing arrangement. As shown at Figures 50 and 51, the opposite construction can also be provided in which the main body 143 is constructed such that the main body 143 is deflectable proximate the receiving members 142 and relatively more rigid at the shaft members 152. In such a case, the main body 143 and receiving members 142 deflect as the rigid shaft members 152 ride against the main body 143 until received in the receiving members, at which point the receiving members 142 snap over the shaft members 152. In the example shown at Figures 50 and 51, the angle a1 is the opposite as shown at Figures 45 to 47 thereby resulting in the main body 143 tapering towards the top from the bottom of the tray body 110. In one configuration, the main body 143 can be configured such that the main body 143 is deflectable at both the locations of the shaft members 152 and receiving members 142.

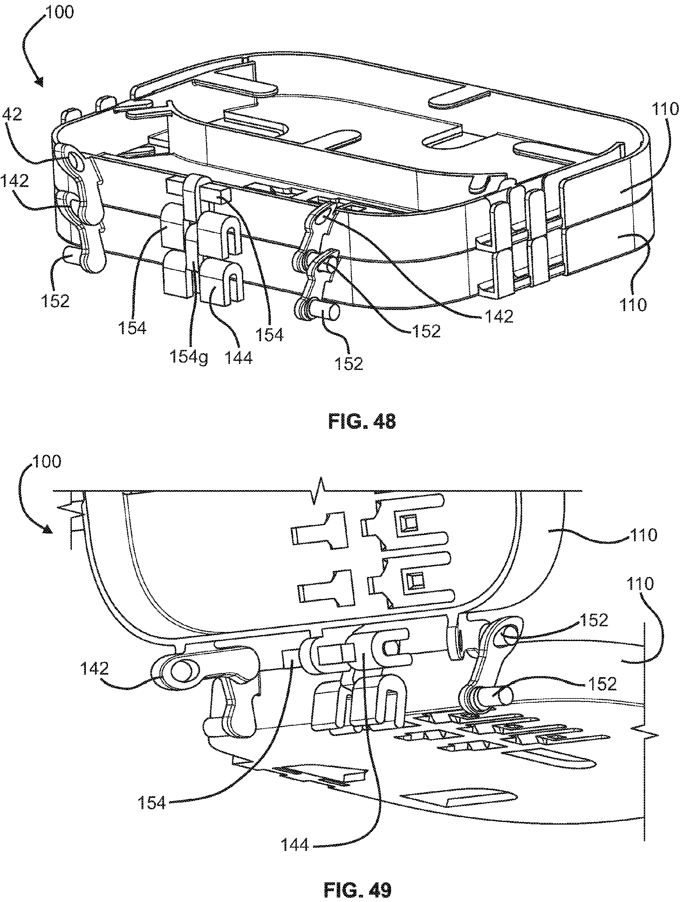

The example presented at Figures 48 and 49 shows a connection arrangement with receiving members 142 and shaft members 152 that are similar to the example shown at Figures 45 to 47. However, the receiving member 144 and shaft member 154 of the connection arrangement are configured such that the indexing arrangement first part 144 is located at the lower location and the second part 154 is located at the upper location of each tray 110. Thus, this example makes clear that any of the disclosed embodiments can be configured such that the locations of the upper components 142, 144 can be switched with the locations of the lower components 152, 154. The example of Figures 48 and 49 also shows that the second part 154 is configured with a central wall or rib 154g from which two second parts 154 extend, wherein the second parts 154 are received into two spaced apart first parts 144. With such a configuration, the central wall or rib 154 is received between the spaced apart first parts 144 such that the lateral alignment between trays 110 is maintained.

## Claims

1. A telecommunications tray assembly comprising:
a) a first telecommunications tray including a first connection arrangement including an upper part and a lower part and including a first indexing arrangement including a first part and a second part; and
b) a second telecommunications tray, identical to the first telecommunications tray, including a second connection arrangement including an upper part and a lower part and a second indexing arrangement including a first part and a second part;
c) wherein the upper part of the second telecommunications tray is rotatably connected to the lower part of the first telecommunications tray and wherein the first part of the first indexing arrangement engages with the second part of the second indexing arrangement to provide a holding force when the first tray is moved into an open position and when the first tray is moved into a closed position.

2. The telecommunications tray assembly of claim 1, wherein the open position is 90 degrees relative to the closed position.

3. The telecommunications tray assembly of claim 1, wherein the first and second indexing arrangement first parts include a bar member with a generally square cross-sectional shape and wherein the first and second indexing arrangement second parts include an open channel.

4. The telecommunications tray assembly of claim 1, further comprising:
a support structure for anchoring the first telecommunications tray within an enclosure, the support structure comprising:
a) a main body including:
i. a first connection arrangement for rotatably connecting to a second connection arrangement of the telecommunications tray; and
ii. a second connection arrangement for connecting the main body to the enclosure.

5. The telecommunications tray assembly of claim 1, further comprising:
a) a retention feature providing a holding force to prevent lateral movement between the main body and telecommunications tray.

6. The telecommunications tray assembly of claim 1, further comprising:
a) a nesting arrangement including an upper nesting arrangement and a lower nesting arrangement, each of the upper and lower nesting arrangements being located on each of the first and second telecommunications trays, wherein the lower nesting arrangement of the first telecommunications tray nests with the upper nesting arrangement of the second telecommunications tray when the first telecommunications tray is rotated into the closed positions.

7. The telecommunications tray assembly of claim 6, wherein the upper nesting arrangement is one of a protrusion and a recess and the lower nesting arrangement is one of a protrusion and a recess.

8. The telecommunications tray assembly of claim 6, wherein the nesting arrangement includes a plurality of protrusions and recesses.

9. The telecommunications tray assembly of claim 1, wherein the upper part of the first and second connection arrangements is a receiving member and wherein the lower part of the first and second connection arrangements is a projection member.

10. The telecommunications tray assembly of claim 1, wherein the upper part of the first and second connection arrangements includes a pair of upper parts and wherein the lower part of the first and second connection arrangements includes a pair of lower parts.

11. The telecommunications tray assembly of claim 5, wherein the retention feature is formed as part of the first and second indexing arrangements.

## Patentansprüche

1. Telekommunikationsablagenanordnung, umfassend:
a) eine erste Telekommunikationsablage einschließlich einer ersten Verbindungsanordnung, die einen oberen Teil und einen unteren Teil umfasst, und einschließlich einer ersten Indexierungsanordnung, die einen ersten Teil und einen zweiten Teil umfasst; und
b) eine zweite Telekommunikationsablage, die mit der ersten Telekommunikationsablage identisch ist und eine zweite Verbindungsanordnung umfasst, die einen oberen Teil und einen unteren Teil umfasst, und eine zweite Indexierungsanordnung umfasst, die einen ersten Teil und einen zweiten Teil umfasst;
c) wobei der obere Teil der zweiten Telekommunikationsablage mit dem unteren Teil der ersten Telekommunikationsablage drehbar verbunden ist, und wobei der erste Teil der ersten Indexierungsanordnung mit dem zweiten Teil der zweiten Indexierungsanordnung in Eingriff ist, um eine Haltekraft bereitzustellen, wenn die erste Ablage in eine offene Position bewegt wird und wenn die erste Ablage in eine geschlossene Position bewegt wird.

2. Telekommunikationsablagenanordnung nach Anspruch 1, wobei die offene Position relativ zu der geschlossenen Position 90 Grad beträgt.

3. Telekommunikationsablagenanordnung nach Anspruch 1, wobei die ersten Teile der ersten und der zweiten Indexierungsanordnung ein Stabelement mit einer im Wesentlichen quadratischen Querschnittsform umfassen, und wobei die zweiten Teile der ersten und der zweiten Indexierungsanordnung einen offenen Kanal umfassen.

4. Telekommunikationsablage nach Anspruch 1, ferner umfassend:
eine Stützstruktur zum Verankern der ersten Telekommunikationsablage in einem Gehäuse, wobei die Stützstruktur umfasst:
a) einen Hauptkörper einschließlich:
i. einer ersten Verbindungsanordnung zum drehbaren Verbinden mit einer zweiten Verbindungsanordnung der Telekommunikationsablage; und
ii. einer zweiten Verbindungsanordnung zum Verbinden des Hauptkörpers mit dem Gehäuse.

5. Telekommunikationsablage nach Anspruch 1, ferner umfassend:
a) ein Rückhaltemerkmal, das eine Haltekraft bereitstellt, um eine seitliche Bewegung zwischen dem Hauptkörper und der Telekommunikationsablage zu verhindern.

6. Telekommunikationsablage nach Anspruch 1, ferner umfassend:
a) eine Verschachtelungsanordnung, die eine obere Verschachtelungsanordnung und eine untere Verschachtelungsanordnung umfasst, wobei jede von der oberen und der unteren Verschachtelungsanordnung auf jeder von der ersten und der zweiten Telekommunikationsablage angeordnet ist, wobei die untere Verschachtelungsanordnung der ersten Telekommunikationsablage mit der oberen Verschachtelungsanordnung der zweiten Telekommunikationsablage verschachtelt ist, wenn die erste Telekommunikationsablage in die geschlossenen Positionen gedreht ist.

7. Telekommunikationsablagenanordnung nach Anspruch 6, wobei die obere Verschachtelungsanordnung eines von einem Vorsprung und einer Aussparung ist und die untere Verschachtelungsanordnung eines von einem Vorsprung und einer Aussparung ist.

8. Telekommunikationsablagenanordnung nach Anspruch 6, wobei die Verschachtelungsanordnung mehrere Vorsprünge und Aussparungen umfasst.

9. Telekommunikationsablagenanordnung nach Anspruch 1, wobei der obere Teil der ersten und der zweiten Verbindungsanordnung ein Aufnahmeelement ist, und wobei der untere Teil der ersten und der zweiten Verbindungsanordnung ein Vorsprungselement ist.

10. Telekommunikationsablagenanordnung nach Anspruch 1, wobei der obere Teil der ersten und der zweiten Verbindungsanordnung ein Paar von oberen Teilen umfasst, und wobei der untere Teil der ersten und der zweiten Verbindungsanordnung ein Paar von unteren Teilen umfasst.

11. Telekommunikationsablagenanordnung nach Anspruch 5, wobei das Rückhalteelement als Teil der ersten und der zweiten Indexierungsanordnung gebildet ist.

## Revendications

1. Ensemble de plateau de télécommunications comprenant :
a) un premier plateau de télécommunications comprenant un premier agencement de connexion comprenant une partie supérieure et une partie inférieure et comprenant un premier agencement d'indexation comprenant une première partie et une deuxième partie ; et
b) un deuxième plateau de télécommunications, identique au premier plateau de télécommunications, comprenant un deuxième agencement de connexion comprenant une partie supérieure et une partie inférieure et un deuxième agencement d'indexation comprenant une première partie et une deuxième partie ;
c) dans lequel la partie supérieure du deuxième plateau de télécommunications est reliée de manière rotative à la partie inférieure du premier plateau de télécommunications et dans lequel la première partie du premier agencement d'indexation s'engage avec la deuxième partie du deuxième agencement d'indexation pour fournir une force de maintien lorsque le premier plateau est déplacé dans une position ouverte et lorsque le premier plateau est déplacé dans une position fermée.

2. Ensemble de plateau de télécommunications selon la revendication 1, dans lequel la position ouverte est à 90 degrés par rapport à la position fermée.

3. Ensemble de plateau de télécommunications selon la revendication 1, dans lequel les premières parties du premier et du deuxième agencements d'indexation comprennent un élément de barre ayant une forme de section transversale généralement carrée et dans lequel les deuxièmes parties du premier et du deuxième agencements d'indexation comprennent un canal ouvert.

4. Ensemble de plateau de télécommunications selon la revendication 1, comprenant en outre :
une structure de support pour l'ancrage du premier plateau de télécommunications à l'intérieur d'une enceinte, la structure de support comprenant :
a) un corps principal comprenant :
i. un premier agencement de connexion pour la connexion rotative à un deuxième agencement de connexion du plateau de télécommunications ; et
ii. un deuxième agencement de connexion pour la connexion du corps principal à l'enceinte.

5. Ensemble de plateau de télécommunications selon la revendication 1, comprenant en outre :
a) une caractéristique de retenue fournissant une force de maintien pour empêcher un mouvement latéral entre le corps principal et le plateau de télécommunications.

6. Ensemble de plateau de télécommunications selon la revendication 1, comprenant en outre :
a) un agencement d'emboîtement comprenant un agencement d'emboîtement supérieur et un agencement d'emboîtement inférieur, chacun parmi les agencements d'emboîtement supérieur et inférieur étant situé sur chacun parmi les premier et deuxième plateaux de télécommunications, dans lequel l'agencement d'emboîtement inférieur du premier plateau de télécommunications s'emboîte avec l'agencement d'emboîtement supérieur du deuxième plateau de télécommunications lorsque le premier plateau de télécommunications est tourné dans les positions fermées.

7. Ensemble de plateau de télécommunications selon la revendication 6, dans lequel l'agencement d'emboîtement supérieur est l'un parmi une saillie et un évidement et l'agencement d'emboîtement inférieur est l'un parmi une saillie et un évidement.

8. Ensemble de plateau de télécommunications selon la revendication 6, dans lequel l'agencement d'emboîtement comprend une pluralité de saillies et d'évidements.

9. Ensemble de plateau de télécommunications selon la revendication 1, dans lequel la partie supérieure des premier et deuxième agencements de connexion est un élément de réception et dans lequel la partie inférieure des premier et deuxième agencements de connexion est un élément en saillie.

10. Ensemble de plateau de télécommunications selon la revendication 1, dans lequel la partie supérieure des premier et deuxième agencements de connexion comprend une paire de parties supérieures et dans lequel la partie inférieure des premier et deuxième agencements de connexion comprend une paire de parties inférieures.

11. Ensemble de plateau de télécommunications selon la revendication 5, dans lequel la caractéristique de retenue est formée en tant que partie des premier et deuxième agencements d'indexation.
